# FASCICULE DE BREVET EUROPEEN

(11) **EP 3 137 311 B1**
(45) Date de publication et mention de la délivrance du brevet: **27.06.2018**
(21) Numéro de dépôt: 15718789.9
(22) Date de dépôt: 30.03.2015
(51) Int. Cl.: B42D 25/324, B42D 25/328, B42D 25/351, B42D 25/373, B42D 25/425, B42D 25/445

(54) **COMPOSANT OPTIQUE DE SÉCURITÉ À EFFET RÉFLECTIF ET FABRICATION D'UN TEL COMPOSANT**
OPTISCHE SICHERHEITSKOMPONENTE MIT REFLEXIONSEFFEKT UND HERSTELLUNG SOLCH EINER KOMPONENTE
REFLECTIVE-EFFECT OPTICAL SECURITY COMPONENT AND MANUFACTURE OF SUCH A COMPONENT

(30) Priorité: 29.04.2014 FR 1453881
(43) Date de publication de la demande: 08.03.2017
(73) Titulaire: SURYS, 77600 Bussy-Saint-Georges (FR)
(72) Inventeur: SOUPARIS, Hugues, F-75012 Paris (FR); PETITON, Valéry, F-77440 Vendrest (FR); NOIZET, Alexandre, F-77220 Gretz Armainvilliers (FR)
(74) Mandataire: Osha Liang
(86) Numéro de dépôt international: PCT/EP2015/056913
(87) Numéro de publication internationale: WO 2015/165675

(56) Documents cités:
- US-A1- 2006 114 530

## Description

### DOMAINE DE L'INVENTION

La présente invention concerne le domaine du marquage de sécurité. Plus particulièrement, elle se rapporte à un composant optique de sécurité à effet réflectif pour vérifier l'authenticité d'un document, et plus particulièrement l'authenticité de documents de valeur tels que les billets de banque.

### ETAT DE L'ART

Pour la protection des billets de banque contre la contrefaçon, on connait notamment les « patchs » et pistes de sécurité (ou « stripes ») et les fils de sécurité. Les patchs et pistes de sécurité sont des composants destinés à adhérés à la surface du billet. Plus précisément, les patchs de sécurité forment un composant délimité sur la surface du billet tandis que les pistes de sécurité s'étendent sur toute la largeur du billet ; elles sont parfois agencées au niveau de d'ouvertures formées dans le billet. Les fils de sécurité sont intégrés dans le papier pendant la fabrication du billet de banque ; ils forment un fil fenêtré de largeur 5 mm environ, visible à la surface du papier à intervalles réguliers. Du fait de leur technique de fabrication complexe, les patchs comme les pistes ou les fils de sécurité offrent un niveau de protection élevé contre la contrefaçon. Ils peuvent contenir des informations identifiables par tous, telles qu'un motif, des dessins, des caractères alphanumériques ou des signes répétitifs. Ils peuvent aussi comprendre des éléments optiques de sécurité pour l'authentification du billet, produisant par exemple des effets holographiques.

Un composant optique de sécurité adapté à la protection des billets de banque comprend généralement un empilement de couches, l'une des couches présentant des régions structurées et réfléchissantes agencées de manière à créer des effets visuels en réflexion, variables avec les conditions d'observation ou d'éclairage du composant. La fabrication d'un tel composant comprend généralement le dépôt sur un film support d'une couche en matériau transparent, par exemple un vernis d'estampage. Puis cette couche est structurée par exemple par embossage au moyen d'une matrice ou master métallique, la structuration étant limitée auxdites régions qui présentent généralement des contours formant des motifs reconnaissables ; vient ensuite la métallisation de la couche structurée, par exemple par évaporation sous vide, puis la démétallisation pour ne laisser la couche métallique qu'aux seuls endroits des régions structurées, ce qui permet de renforcer le contraste des motifs qui présentent des effets visuels variables et reconnaissables. L'ensemble peut être ensuite revêtu d'une couche de protection, qui peut être une couche adhésive dans le cas d'un patch ou d'une piste de sécurité.

Parmi toutes ces étapes, la démétallisation est particulièrement délicate car elle doit être pratiquée avec précision en respectant les contours des motifs ainsi formés, qui peuvent parfois être très fins, voire filiformes. Pour cette opération de démétallisation, il est connu d'appliquer un vernis de protection autrement appelé « vernis épargne » (ou « etching mask » selon l'expression anglo-saxonne) à l'endroit des zones structurées, puis de passer le composant dans un bain corrosif qui va permettre de supprimer le métal sauf aux endroits protégés. Le procédé est cependant complexe et coûteux du fait de la très grande précision requise et le résultat limité par les tolérances nécessaires lors de l'application du vernis épargne.

Différents documents de l'art antérieur décrivent des techniques qui permettent d'améliorer la précision de démétallisation. Ainsi par exemple, dans le brevet US8053146, il est décrit une méthode qui consiste à exploiter la différence d'opacité d'une couche métallisée structurée par rapport à une couche lisse et d'utiliser ainsi les régions structurées comme masques de transparence. Plus précisément, la méthode décrite comprend la métallisation totale de la surface, puis l'enduction sur toute la surface d'une couche photosensible (résine); vient ensuite l'insolation de la couche au travers du masque de métal. Suivant le type de résine, lors du lavage, soit les zones de résine non exposées sont dissoutes, soit les zones de résine exposées sont dissoutes ; dans les deux cas, c'est le masque créé par la résine et donc parfaitement repéré qui sert de vernis épargne. Cette méthode montre une très bonne efficacité en termes de précision de démétallisation.

Dans la demande de brevet publiée US 2006/0114530, il est décrit une méthode dans laquelle, comme dans l'état de l'art précédemment décrit, un vernis de protection est appliqué sur la couche microstructurée métallisée puis le métal retiré à l'endroit des zones non couvertes par le vernis. Selon cette méthode cependant, le vernis est appliqué au moyen d'une impression jet d'encre, ce qui permet une démétallisation variable.

La présente invention décrit une technique de démétallisation alternative aux techniques connues de l'art antérieur, qui au lieu de chercher la précision de la démétallisation, cherche à simuler la transparence autour des zones structurées. Il est ainsi possible de présenter un effet visuel comparable pour un observateur à celui d'une démétallisation obtenue par un procédé de grande précision, tout en gardant un procédé plus simple, qui présente un nombre réduit d'étapes et qui est de ce fait moins coûteux.

### RESUME DE L'INVENTION

Selon un premier aspect, l'invention concerne un composant optique de sécurité destiné à être observé en réflexion dans une bande spectrale de contrôle selon une face d'observation, le composant comprenant:
- un ensemble de couches transparentes dans ladite bande spectrale de contrôle, dont une couche structurée, ladite couche structurée comprenant, au niveau d'une ou plusieurs zones de contrôle formant des éléments graphiques reconnaissables, des microstructures adaptées à la génération d'effets visuels variables en fonction des conditions d'éclairage et/ou d'observation du composant, et à la périphérie desdites zones de contrôle, des microstructures présentant une forme, une répartition spatiale et des dimensions en hauteur et latérales aléatoires pour former une structure optique diffusante dans la bande spectrale de contrôle ;
- une couche métallique agencée de façon localisée sur la couche structurée, de telle sorte à présenter une réflexion maximale au niveau des zones de contrôle et une transparence croissante au niveau de la structure optique diffusante, la transparence étant d'autant plus grande que l'on s'éloigne des zones de contrôle.

Les zones de contrôle peuvent former tout type d'élément graphique reconnaissable, tels que des motifs, des éléments de texte ou des caractères alphanumériques, des entrelacs de lignes (également appelées « guilloches »), etc. Par ailleurs, les zones de contrôle peuvent comprendre des microstructures agencées de toute façon connue pour procurer des effets visuels variables, par exemple en brillance et/ou en couleur, en fonction des conditions d'éclairage et/ou d'observation, par exemple des structures diffractives comme des réseaux à une ou deux dimensions, symétriques ou blasés, adaptés pour fonctionner à l'ordre zéro, à l'ordre 1 ou à des ordres supérieurs, des macrostructures aptes à générer des bas-reliefs ou objets de Fresnel réflectifs, pouvant être multiplexées ou non à des réseaux de pas plus fins, des structures plasmoniques, etc. Les zones de contrôle peuvent comprendre également des zones lisses non structurées qui peuvent former par exemple des éléments de séparation entre deux régions structurées.

Dans la présente description, une couche est dite transparente lorsqu'elle présente une transmission d'un flux lumineux incident supérieure à 80% et de préférence supérieure à 90%.

La « transparence » de la couche métallique dépend de sa répartition ; elle est mesurée localement par le pourcentage de flux lumineux transmis par rapport un flux lumineux incident dans la bande spectrale de contrôle.

Selon une variante, la couche métallique est formée de zones ponctuelles de densité de répartition et/ou tailles variables.

Dans le composant optique de sécurité ainsi décrit, les microstructures formant la structure optique diffusante permettent de donner à un observateur une simulation du papier utilisé pour le billet de banque par exemple. La transparence progressive de la couche métallique, résultant par exemple d'une variation de la densité de points ou de la taille des points dans le cas d'une couche métallique formée de zones ponctuelles, permet un passage en douceur d'une zone 100% opaque au contact des éléments diffractifs des zones de contrôle jusqu'à une zone transparente en bordure du patch ou de la piste. Contrairement aux zones de contrôle qui présentent des effets visuels variables par exemple en brillance et/ou en couleur avec les conditions d'observation, la structure optique diffusante produit un effet « blanc » diffusant, stable en couleur et en brillance pour toutes conditions d'observation, comme le papier du billet de banque. Il n'est donc plus besoin de se poser la question de la précision de la démétallisation ; l'impression d'un contour des zones de contrôle parfaitement délimité sera donnée par la limite entre les zones de contrôle et la structure optique diffusante, limite qui est définie de façon extrêmement précise et reproductible lors de l'étape de formation de la structure.

Le métal est choisi par exemple selon l'un des métaux suivants : argent, aluminium, or, chrome, cuivre, ou un alliage à partir de l'un de ces métaux.

Selon une variante, au moins une des couches transparentes agencées entre la face d'observation et la couche métallique peut être teintée, de telle sorte à présenter un accord de teinte optimale avec la couleur du papier utilisée. Cette teinte n'enlève cependant pas l'aspect transparent de la couche.

Selon une variante, la couche métallique comprend au moins deux régions formées chacune d'un métal différent et correspondant par exemple à deux zones de contrôle distinctes. Cette configuration permet de modifier les effets visuels variables d'une zone à l'autre.

Selon une variante, le composant optique de sécurité selon la présente description est adapté à la formation d'un patch de sécurité ou d'une piste de sécurité pour la sécurisation d'un billet de banque ou de tout document de valeur ou d'identité. Il comprend avantageusement sur la face opposée à la face d'observation une couche pour le transfert du composant sur le billet ou sur le document.

Avantageusement, le composant comprend en outre, du côté de la face d'observation, un film support destiné à être détaché après transfert du patch ou de la piste de sécurité sur le billet de banque.

Selon une variante, le composant optique de sécurité selon la présente description est adapté à la fabrication d'un fil de sécurité pour la sécurisation des billets de banque, et comprend du côté de la face d'observation et sur la face opposée à la face d'observation, des couches de protection.

Selon un deuxième aspect, l'invention concerne un procédé de fabrication d'un composant optique de sécurité selon le premier aspect.

Ainsi, l'invention concerne un procédé de fabrication d'un composant optique de sécurité destiné à être observé dans une bande spectrale de contrôle, selon une face d'observation, le procédé comprenant :
- la formation sur un film support d'une couche transparente structurée, ladite couche structurée comprenant, au niveau d'une ou plusieurs zones de contrôle formant des éléments graphiques reconnaissables, des microstructures adaptées à la génération d'effets visuels variables en fonction des conditions d'éclairage et/ou d'observation du composant, et à la périphérie desdites zones de contrôle, des microstructures présentant une forme, une répartition spatiale et des dimensions en hauteur et latérales aléatoires pour former une structure optique diffusante dans la bande spectrale de contrôle ;
- le dépôt sur l'ensemble de la couche structurée d'une couche métallique ;
- la démétallisation partielle de la couche métallique de telle sorte à ce que la couche métallique résultante présente une réflexion maximale au niveau des zones de contrôle et une transparence croissante au niveau de la structure optique diffusante, la transparence étant d'autant plus grande que l'on s'éloigne des zones de contrôle.

Selon une variante, la démétallisation partielle comprend l'application locale d'un vernis épargne puis l'élimination de la couche métallique aux endroits non recouverts par le vernis épargne.

Le vernis épargne est avantageusement appliqué par impression.
Ainsi, la démétallisation et la transparence progressive de la couche métallique résultante peuvent être obtenue en jouant sur la trame d'impression du vernis épargne, et notamment, la densité (de la répartition spatiale) et/ou la taille du point de trame.

Alternativement, la démétallisation partielle peut comprendre l'application préalable d'une encre soluble, celle-ci étant imprimée avant la métallisation dans les zones qui doivent rester non métallisées au final.

### BREVE DESCRIPTION DES FIGURES

D'autres caractéristiques et avantages de l'invention apparaîtront à la lecture de la description qui suit, illustrée par les figures sur lesquelles :
La figure 1, une vue partielle en coupe d'un composant optique de sécurité selon l'invention selon une variante ;
La figure 2, une image d'un exemple de structure optique diffusante ;
Les figures 3A à 3C, des schémas illustrant des étapes visant à la démétallisation partielle selon un exemple de réalisation du procédé selon la présente description ;
Les figures 4A et 4B, des schémas montrant un exemple de trame pour le vernis épargne et l'aspect dégradé résultant de la démétallisation obtenu avec cet exemple ;
La figure 5, un schéma montrant un autre exemple de trame pour le vernis épargne ;
La figure 6, un schéma illustrant un billet de banque sur lequel sont disposés un patch et une piste de sécurité, selon des exemples de la présente description.

Sur les figures, les éléments identiques sont repérés par les mêmes références.

### DESCRIPTION DETAILLEE

Les figures sont représentées à fin d'illustration et ne sont pas représentatives ni des échelles, ni des formes des composants réels.

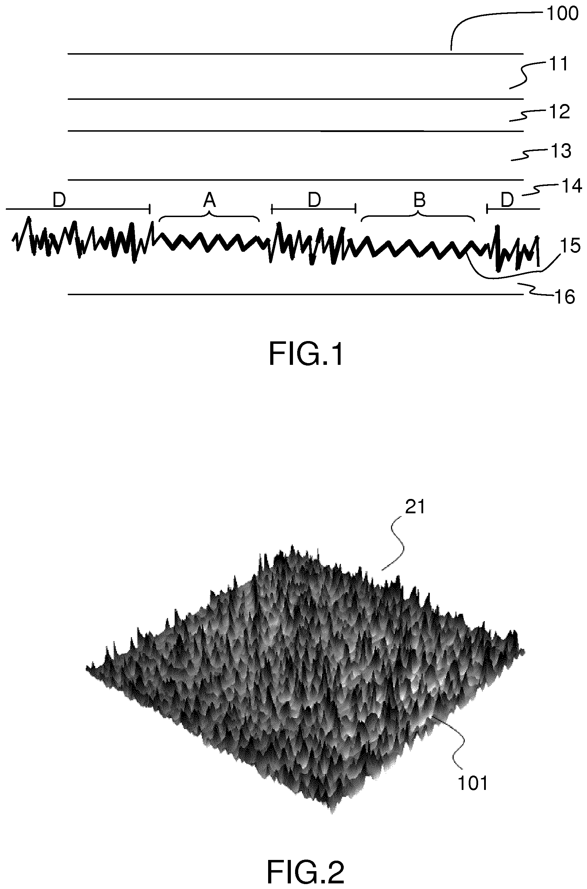

La figure 1 représente un premier exemple d'un composant optique de sécurité 10 selon une vue de coupe (partielle), destiné à former par exemple un patch ou piste de sécurité pour billet de banque. Le composant optique de sécurité est destiné à être contrôlé dans une bande spectrale de contrôle selon une face d'observation 100. Le composant 10 comprend un ensemble de couches transparentes (11 - 16 dans l'exemple de la figure 1) dont une couche structurée 14. Dans l'exemple de la figure 1, le composant 10 comprend un film support 11, par exemple un film en matériau polymère, par exemple un film en polyéthylène téréphtalate (PET) de quelques dizaines de micromètres, typiquement 20 à 50 µm, ainsi qu'une couche de détachement 12 (optionnelle), par exemple en cire naturelle ou synthétique. La couche de détachement permet de retirer le film support en polymère 11 après fixation du composant optique sur le billet de banque. Le composant optique de sécurité 30 comprend par ailleurs la couche structurée 14 revêtue d'une couche métallique 15 recouvrant partiellement la couche structurée 14 comme cela sera décrit par la suite. Selon une variante, le composant 10 comprend par ailleurs une couche transparente 13, par exemple un vernis de protection contre les agressions physico chimiques du composant une fois transféré, et une couche d'adhésif, par exemple une couche d'adhésif ré-activable à chaud, pour la fixation du composant optique de sécurité sur le billet de banque. En pratique, comme cela sera détaillé par la suite, le composant optique de sécurité est fabriqué en empilant les couches sur le film support 11, puis le composant est fixé sur le billet de banque grâce à la couche d'adhésif. Le film support 11 peut alors être détaché, par exemple au moyen de la couche de détachement 12, de telle sorte que seules les couches 13 à 16 sont transférées sur le billet.

Selon une variante, le composant optique de sécurité peut être adapté à la formation d'un fil de sécurité destiné à être intégré dans le papier pendant la fabrication du billet. Dans ce cas, le composant peut comprendre comme précédemment un film support 11 (12 à 25 µm), la couche structurée 14 et la couche métallique partielle 15, la couche 16 formant alors une couche de protection, et étant formée par exemple d'un film ou d'un vernis. Comme dans l'exemple précédent, la fabrication peut être réalisée par empilement des couches sur le film support 11. La couche de protection 16 est ensuite déposée pour donner au fil de sécurité la solidité nécessaire.

Selon la présente description, la couche structurée 14 comprend, au niveau d'une ou plusieurs zones de contrôle (notées A et B sur la figure 1), des microstructures formant selon une variante des éléments diffractifs, par exemple des réseaux de diffraction. En dehors des zones de contrôle, la couche structurée 14 comprend des microstructures de formes et de répartition spatiale, de dimensions en hauteur et latérales aléatoires pour former une structure optique diffusante (notée D) dans la bande spectrale de contrôle.

Les zones de contrôle comprennent des microstructures adaptées à la formation d'effets visuels reconnaissables et variables avec les conditions d'éclairage et/ou d'observation. Les microstructures forment par exemple des réseaux de diffraction d'ordre supérieur ou égal à 1, ou des macrostructures aptes à générer des bas-reliefs ou objets de Fresnel réflectifs, des structures plasmoniques, etc. Les effets visuels recherchés sont par exemple, et de façon connue, des effets colorés iridescents variables par rotation en tilt haut /bas ou Droite/gauche, ou par rotation azimutale du composant, des animations, des effets d'apparition/disparition, des morphings, etc.

Au contraire des zones de contrôle A et B, la structure optique diffusante D présente une répartition aléatoire des microstructures, à la fois spatialement et dans ses dimensions, afin de procurer à un observateur un effet « blanc », non optiquement variable, stable en couleur et en brillance pour toutes conditions d'utilisation.

La figure 2 représente ainsi une image d'un exemple de structure optique diffusante 21 selon la présente description. Cette image est obtenue au moyen d'un microscope à force atomique (AFM) dans lequel une pointe balaye la surface pour effectuer une topographie par différence de potentiel électrique entre la pointe et la surface mesurée. Les microstructures 101 sur la figure 2 présentent typiquement une hauteur maximale de quelques centaines de nanomètres, par exemple entre 400 et 600 nanomètres, par exemple autour de 500 nanomètres, et jusqu'à quelques microns.

Comme cela est illustré sur la figure 1, la couche métallique 15 est agencée de façon localisée sur la couche structurée 14, de telle sorte à présenter une réflexion maximale au niveau des zones de contrôle (A, B) et une transparence progressive au niveau de la structure optique diffusante (D), la transparence étant d'autant plus grande que l'on s'éloigne des zones de contrôle. La métallisation au niveau des zones de contrôle permet de garantir un effet visuel en réflexion maximal. Au niveau de la structure optique diffusante, la couche métallique procure à un observateur une teinte matte de couleur neutre blanchâtre (ou blanc cassé) qui se confond avec la couleur du papier. Ainsi, la métallisation peut « déborder » des zones de contrôle et couvrir des régions périphériques ; un observateur verra toujours les zones de contrôle avec le même contraste puisque c'est la différence de structure entre les zones de contrôles et la structure optique diffusante qui permettra de définir précisément les contours des zones de contrôle.

Selon une variante, au moins une des couches transparente 13 ou 14 peut être teintée pour simuler avec plus de précision encore la couleur du papier du billet de banque sur lequel le composant optique de sécurité (patch, piste ou fil de sécurité) est destiné à être appliqué.

Le procédé de fabrication d'un composant optique de sécurité ainsi décrit se trouve grandement simplifié par rapport aux procédés de l'art antérieur, tout en offrant à un observateur un effet visuel comparable à celui obtenu par une démétallisation parfaite.

Le procédé de fabrication comprend selon une variante les étapes suivantes.

Dans un premier temps, l'ensemble des microstructures formant les zones de contrôle (A, B) et la structure optique diffusante (D) sont enregistrées par photolithographie ou lithographie par faisceau d'électrons sur un support photosensible ou « photorésist » selon l'expression anglo-saxonne. L'enregistrement de la structure diffusante sera avantageusement réalisé par copie optique d'une structure naturellement diffusante, ou par enregistrement du « speckle » produit par l'éclairement par un faisceau laser d'un verre dépoli dont les caractéristiques microscopiques sont naturellement aléatoires et analogiques. Une étape de galvanoplastie permet de reporter ces structures optiques dans un matériau résistant par exemple à base de Nickel pour réaliser la matrice ou « master » métallique. Un estampage est réalisé à partir de la matrice pour transférer la microstructure sur la couche 14 en matériau transparent (figure 1), typiquement un vernis d'estampage de quelques microns d'épaisseur porté par le film 11 de 12 µm à 50 µm en matériau polymère, par exemple en PET (polyéthylène téréphtalate). L'estampage peut être fait par pressage à chaud du matériau transparent (« hot embossing ») ou par moulage (« UV casting » ou « UV Curing »). L'indice de réfraction de la couche formée du vernis d'estampage est typiquement de 1,5. Vient ensuite la métallisation de l'ensemble de la surface de la couche ainsi embossée. La métallisation est réalisée par toute technique connue de l'homme de l'art, par exemple par évaporation sous vide d'un métal ou par « sputtering », le métal étant choisi par exemple parmi l'un des métaux suivants : argent, aluminium, or, chrome, cuivre, ou un alliage obtenu à partir de l'un de ces métaux.

La démétallisation de la couche métallique pour obtenir la couche métallique partielle 15 peut être obtenue selon différents procédés connus, par exemple par application d'un vernis de protection, ou « vernis épargne », puis dissolution de la couche métallique aux endroits où le vernis épargne n'est pas appliqué. Dans tous les cas, il n'est plus nécessaire de procéder à une démétallisation à l'endroit exact des contours des zones de contrôle. En pratique, au contraire, on pourra laisser une marge autour de la zone de contrôle et appliquer une démétallisation progressive vers l'extérieur de la zone.

Le vernis épargne peut être tout vernis résistant au bain corrosif destiné à dissoudre le métal (par exemple un bain de soude pour la dissolution notamment de l'aluminium). Par exemple, le vernis épargne est de nature cellulosique et/ou métallique et/ou plastique. Selon un mode de réalisation préféré, le vernis épargne comprend l'un au moins d'un polyvynilalcool ou d'un polymère nitrocellulosique, tel que par exemple le produit 39514 de Sun Chemical®.

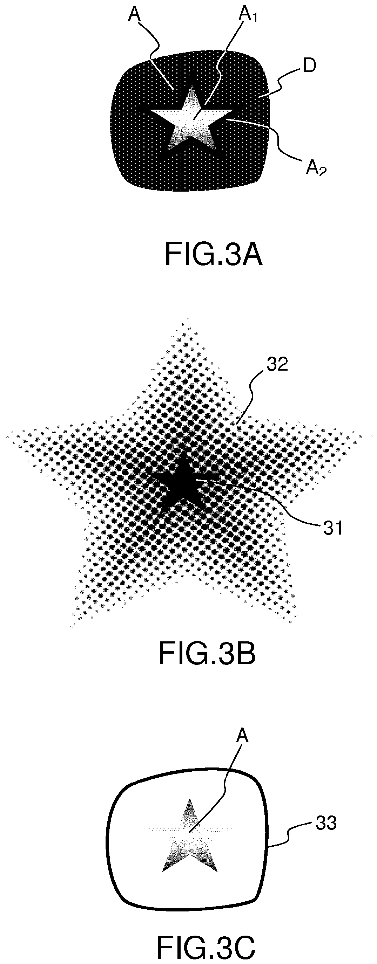

La figure 3A illustre ainsi une zone de contrôle A formant un motif reconnaissable (dans cet exemple une étoile). La zone de contrôle comprend dans cet exemple une région structurée A1, de telle sorte à former un effet visuel variable pour un observateur et autour, une région lisse A2 qui forme un contour. Partout autour, la couche est structurée pour former une structure optique diffusante D comme cela a été décrit précédemment. L'ensemble de la couche est métallisée. Sur la figure 3B est schématisée sous forme de points l'application d'un vernis épargne. Dans une région centrale 31, la densité du vernis épargne est maximale ; la couche de vernis est uniforme de telle sorte à complètement protéger le motif de la démétallisation. La région 31 est avantageusement sensiblement plus grande que la zone de contrôle représentée sur la figure 3A. Autour de la région 3A, dans une région périphérique 32, le vernis épargne est appliqué avec une densité de plus en plus faible jusqu'à disparaître complètement pour assurer une démétallisation complète à l'extérieur des zones de contrôle. Après l'étape de dissolution du métal, comme cela apparaît sur la figure 3C, un observateur peut voir de façon parfaitement défini le motif en étoile de la zone de contrôle A, la structure optique diffusante partiellement métallisée (région 33) permettant de simuler le papier du billet jusqu'à ce que l'observateur voit par transparence le papier lui-même.

Selon une variante, le vernis épargne est appliqué par impression, en faisant varier la taille et/ou la densité des points de trame d'impression. Il est ainsi aisé de contrôler la densité du vernis à appliquer et donc la transparence de la couche métallique résultante.

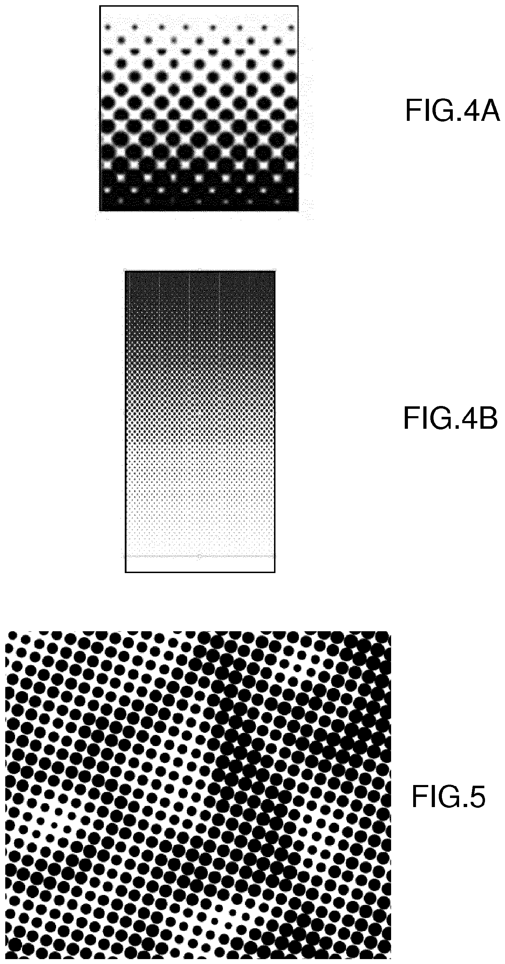

La figure 4A illustre ainsi un exemple d'impression d'un vernis épargne dans lequel la taille du point de trame d'impression est modifiée pour passer d'une région de forte densité (région inférieure) à une région de faible densité (région supérieure). Dans cet exemple, on observe une modification par pallier de la dimension des points de trame. Les points de trame pourront varier d'une dimension de 500 µm dans les régions de forte densité à quelques dizaines de microns dans les zones de faible densité optique, voire quelques microns, car il n'est pas nécessaire dans le procédé décrit d'avoir une dimension du point supérieure à la résolution de l'oeil. Seule la technique d'impression constitue une limitation. Ainsi par exemple, des points respectivement de l'ordre de 60 à 200 µm de diamètre disposés régulièrement suivant une trame de 200 µm de pas dans les 2 directions produiront une transparence comprise entre environ 90% à 20%. La figure 4B illustre le rendu visuel à l'échelle habituelle d'observation (sans grossissement). Alternativement, la dimension du point de trame peut rester identique et on fait varier la densité de répartition des points d'impression du vernis épargne. Il est également possible de faire varier à la fois la densité et la dimension des points d'impression.

La figure 5 représente un exemple d'application d'un vernis épargne dans le cas de la présence de plusieurs zones de contrôle. A l'endroit de chacune de ces zones, la densité de vernis est maximale.

Suite à la démétallisation, le vernis épargne peut ou non être retiré. Une couche de fermeture (16, figure 1) peut ensuite être appliquée, par exemple par un procédé d'enduction. Pour certaines applications, telles que les produits de laminage ou de marquage à chaud, cette couche peut être une couche adhésive. La couche de fermeture présente typiquement une épaisseur supérieure à plusieurs microns. Selon la destination finale du produit, un adhésif peut être appliqué sur la couche de vernis épargne ou directement sur la couche réflective 15. Selon une variante, une couche de détachement 12 (par exemple une cire) peut être appliquée entre le vernis de protection 13 et à défaut entre le vernis d'estampage 14, et le film support 11 en PET. On transfert l'élément de sécurité sur le document en pressant à chaud l'élément de sécurité sur le document, le composant de sécurité 10 se trouvant face au document. Pendant le transfert, le film adhésif colle sur le support du document et la couche de détachement 12 ainsi que le film support 11 sont retirés.

Selon une variante, il est possible au moment de l'étape de métallisation d'appliquer plusieurs métaux différents, par exemple pour rechercher des effets visuels différents. Pour cela, on pourra par exemple appliquer avec un motif donné une encre soluble sur la couche embossée. Lors de la métallisation avec le premier métal, celui-ci est appliqué uniformément sur la couche mais ne subsiste que sur les zones où ne se trouve pas l'encre lorsque l'encre est retirée. Ensuite une deuxième métallisation sélective est réalisée comprenant également une étape d'impression préalable d'encre soluble permettant de sélectionner les zones d'application du deuxième métal.

Selon une variante, les zones métalliques différentes peuvent correspondre à des zones de contrôle différentes. Autrement dit, le premier métal est appliqué sur une ou plusieurs première(s) zone(s) de protection, tandis que le deuxième métal est appliqué sur une ou plusieurs autre(s) deuxième(s) zones de contrôle.

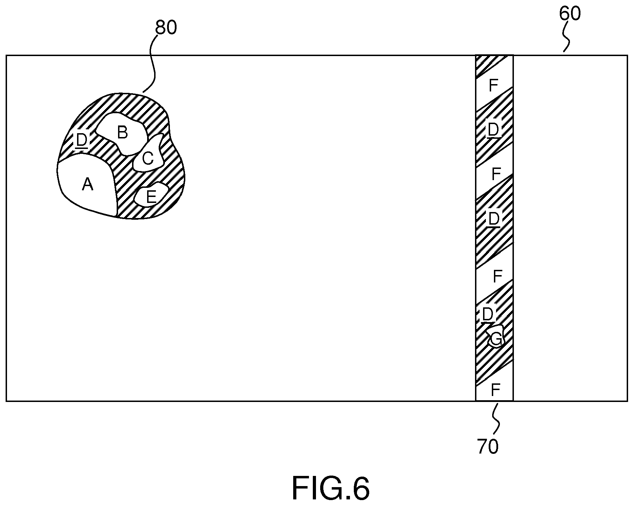

La figure 6 représente de façon schématique un billet de banque qui comprend une piste de sécurité 70 et un patch de sécurité 80. Sur chacun des composants optiques de sécurité ainsi représentés, les zones de contrôle sont indiquées par les lettres A, B, C, E, F, G, et la structure optique diffractive périphérique D est représentée par une région hachurée. On observe sur le patch 80 ou sur la piste 70 que les zones de contrôle peuvent constituer des ilots indépendants (A, E, F, G) ou connexes (B, C), être inscrits complètement dans la zone hachurée (B, C, E, G) ou se trouver à la limite (A, F). On observe sur la piste 70 que les motifs peuvent se répéter plusieurs fois (F).

Bien que décrite à travers un certain nombre d'exemples de réalisation, le composant optique de sécurité selon l'invention et le procédé de fabrication dudit composant comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

## Revendications

1. Composant optique de sécurité (10) destiné à être observé en réflexion dans une bande spectrale de contrôle selon une face d'observation (100), le composant comprenant:
- un ensemble de couches transparentes dans ladite bande spectrale de contrôle, dont une couche structurée, ladite couche structurée comprenant, au niveau d'une ou plusieurs zones de contrôle (A, B) formant des éléments graphiques reconnaissables, des microstructures adaptées à la génération d'effets visuels variables en fonction des conditions d'éclairage et/ou d'observation du composant, et à la périphérie desdites zones de contrôle, des microstructures (101) présentant une forme, une répartition spatiale et des dimensions en hauteur et latérales aléatoires pour former une structure optique diffusante (D) dans la bande spectrale de contrôle ;
- une couche métallique (15) agencée de façon localisée sur la couche structurée, de telle sorte à présenter une réflexion maximale au niveau des zones de contrôle et une transparence croissante au niveau de la structure optique diffusante, la transparence étant d'autant plus grande que l'on s'éloigne des zones de contrôle.

2. Composant optique de sécurité selon la revendication 1, dans lequel la couche métallique est formée de zones ponctuelles dont la densité de répartition et/ou la taille sont variables.

3. Composant optique de sécurité selon l'une quelconque des revendications précédentes, adapté à la formation d'un patch ou d'une piste de sécurité pour la sécurisation d'un document fiduciaire de type billet de banque, et comprenant sur la face opposée à la face d'observation une couche (16) pour le transfert du composant sur le document.

4. Composant optique de sécurité selon la revendication 3, comprenant en outre, du côté de la face d'observation, un film support (11) destiné à être détaché après transfert du composant sur le document.

5. Composant optique de sécurité selon l'une quelconque des revendications 1 ou 2, adapté à la fabrication d'un fil de sécurité pour la sécurisation des billets de banque, et comprenant du côté de la face d'observation et sur la face opposée à la face d'observation, des couches (11, 16) de protection.

6. Composant optique selon l'une quelconque des revendications précédentes, dans lequel au moins une des couches transparentes est teintée.

7. Procédé de fabrication d'un composant optique de sécurité destiné à être observé dans une bande spectrale de contrôle, selon une face d'observation (100), le procédé comprenant :
- la formation sur un film support (11) d'une couche transparente structurée (14), ladite couche structurée comprenant, ladite couche structurée comprenant, au niveau d'une ou plusieurs zones de contrôle (A, B, C) formant des éléments graphiques reconnaissables, des microstructures adaptées à la génération d'effets visuels variables en fonction des conditions d'éclairage et/ou d'observation du composant, et à la périphérie desdites zones de contrôle, des microstructures présentant une forme, une répartition spatiale et des dimensions en hauteur et latérales aléatoires pour former une structure optique diffusante dans la bande spectrale de contrôle ;
- le dépôt sur l'ensemble de la couche structurée (14) d'une couche métallique ;
- la démétallisation partielle de la couche métallique de telle sorte à ce que la couche métallique résultante (15) présente une réflexion maximale au niveau des zones de contrôle et une transparence croissante au niveau de la structure optique diffusante, la transparence étant d'autant plus grande que l'on s'éloigne des zones de contrôle.

8. Procédé selon la revendication 7, dans lequel la démétallisation partielle comprend l'application locale par impression d'un vernis épargne puis l'élimination de la couche métallique aux endroits non recouverts du vernis épargne.

9. Procédé selon la revendication 8, dans lequel la transparence progressive de la couche métallique résultante de la démétallisation est obtenue en jouant sur la densité et/ou la taille du point de trame d'impression du vernis épargne.

## Patentansprüche

1. Optische Sicherheitskomponente (10), die dazu bestimmt ist, in Reflexion in einem Kontroll-Spektralband entlang einer Betrachtungsfläche (100) betrachtet zu werden, wobei die Komponente umfasst:
- eine Anordnung von transparenten Schichten in dem Kontroll-Spektralband, einschließlich einer strukturierten Schicht, wobei die strukturierte Schicht im Bereich von einem oder mehreren Kontrollbereichen (A, B), die erkennbare grafische Elemente bilden, Mikrostrukturen umfasst, die für die Erzeugung von visuellen Effekten ausgelegt sind, die in Abhängigkeit von den Beleuchtungs- und/oder Betrachtungsbedingungen der Komponente variieren, sowie am Umfang der Kontrollbereiche Mikrostrukturen (101), die eine Form, eine räumliche Verteilung und beliebige Höhen- und Seitenabmessungen aufweisen, um eine streuende optische Struktur (D) in dem Kontroll-Spektralband zu bilden;
- eine Metallschicht (15), die bereichsweise auf der strukturierten Schicht so angeordnet ist, dass sie eine maximale Reflexion im Bereich der Kontrollbereiche und eine zunehmende Transparenz im Bereich der streuenden optischen Struktur aufweist, wobei die Transparenz mit zunehmender Entfernung von den Kontrollbereichen größer wird.

2. Optische Sicherheitskomponente nach Anspruch 1, wobei die Metallschicht aus punktuellen Bereichen gebildet ist, deren Verteilungsdichte und/oder Größe veränderlich ist.

3. Optische Sicherheitskomponente nach einem der vorangehenden Ansprüche, die dazu ausgelegt ist, ein Patch oder eine Sicherheitsbahn zur Absicherung eines Treuhanddokuments vom Typ Banknote zu bilden, und auf der Seite, die der Betrachtungsfläche entgegengesetzt ist, eine Schicht (16) zum Übertragen der Komponente auf das Dokument aufweist.

4. Optische Sicherheitskomponente nach Anspruch 3, ferner enthaltend auf der Seite der Betrachtungsfläche eine Trägerfolie (11), die dazu bestimmt ist, nach dem Übertragen der Komponente auf das Dokument abgelöst zu werden.

5. Optische Sicherheitskomponente nach einem der Ansprüche 1 oder 2, die dazu ausgelegt ist, einen Sicherheitsfaden zur Absicherung der Banknoten herzustellen, und auf der Seite der Betrachtungsfläche und auf der der Betrachtungsfläche entgegengesetzten Seite Schutzschichten (11, 16) aufweist.

6. Optische Sicherheitskomponente nach einem der vorangehenden Ansprüche, wobei zumindest eine der transparenten Schichten getönt ist.

7. Verfahren zum Herstellen einer optischen Sicherheitskomponente, die dazu bestimmt ist, in einem Kontroll-Spektralband entlang einer Betrachtungsfläche (100) betrachtet zu werden, wobei das Verfahren umfasst:
- Ausbilden einer strukturierten transparenten Schicht (14) auf einer Trägerfolie (11), wobei die strukturierte Schicht im Bereich von einem oder mehreren Kontrollbereichen (A, B, C), die erkennbare grafische Elemente bilden, Mikrostrukturen umfasst, wobei die Mikrostrukturen für die Erzeugung von visuellen Effekten ausgelegt sind, die in Abhängigkeit von den Beleuchtungs- und/oder Betrachtungsbedingungen der Komponente variieren, sowie am Umfang der Kontrollbereiche Mikrostrukturen, die eine Form, eine räumliche Verteilung und beliebige Höhen- und Seitenabmessungen aufweisen, um eine streuende optische Struktur in dem Kontroll-Spektralband zu bilden;
- Aufbringen einer Metallschicht (15) auf die gesamte strukturierte Schicht (14);
- teilweises Entmetallisieren der Metallschicht, derart, dass die verbleibende Metallschicht (15) eine maximale Reflexion im Bereich der Kontrollbereiche und eine zunehmende Transparenz im Bereich der streuenden optischen Struktur aufweist, wobei die Transparenz mit zunehmender Entfernung von den Kontrollbereichen größer wird.

8. Verfahren nach Anspruch 7, wobei die teilweise Entmetallisierung das bereichsweise Auftragen eines Stopplacks durch Aufdrucken, dann das Beseitigen der Metallschicht an den nicht von dem Stopplack bedeckten Stellen umfasst.

9. Verfahren nach Anspruch 8, wobei die progressive Transparenz der nach der Entmetallisierung verbleibenden Metallschicht durch Variieren der Dichte und/oder der Größe des Druckrasterpunkts des Stopplacks erhalten wird.

## Claims

1. An optical security component (10) intended to be observed in reflection in a control spectral band from an observation face (100), the component comprising:
- a set of layers that are transparent in said control spectral band, one layer of which is structured, wherein said structured layer comprises, in one or more control areas (A, B) forming recognisable graphic elements, microstructures suitable for generating variable visual effects that vary depending on the conditions of illumination and/or observation of the component, and, on the periphery of said control areas, microstructures (101), wherein the shape, spatial distribution, height dimensions and lateral dimensions of said microstructures are random in order to form an optical diffusing structure (D) in the control spectral band;
- a metal layer (15) arranged in a localised manner on the structured layer, such as to have a maximum reflection at the level of the control areas and a transparency that increases at the level the optical diffusing structure, the transparency increasing with distance from the control areas.

2. The optical security component according to Claim 1, in which the metal layer is formed of point areas having variable distribution density and/or size.

3. The optical security component according to any one of the preceding claims, suitable for the formation of a security patch or a security stripe for a fiduciary document of banknote type, and comprising on the face opposite to the observation face a layer (16) for the transfer of the component on the document.

4. The optical security component according to Claim 3, further comprising, on the observation face, a support film (11) intended to be detached after transfer of the component on the document.

5. The optical security component according to any one of Claims 1 or 2, suitable for the manufacture of a security thread for securing banknotes and comprising, on the observation face and on the face opposite to the observation face, protective layers (11, 16).

6. The optical component according to any one of the preceding claims, in which at least one of the transparent layers is tinted.

7. A method of manufacture of an optical security component intended to be observed in a control spectral band from an observation face (100), the method comprising:
- the formation on a support film (11) of a structured transparent layer (14), wherein said structured layer comprises, in one or several control areas (A, B, C) forming recognisable graphic elements, microstructures suitable for generating visual effects that vary depending on the conditions of illumination and/or observation of the component, and, on the periphery of said control areas, microstructures, wherein the shape, spatial distribution, height dimensions and lateral dimensions of said microstructures are random in order to form an optical diffusing structure in the control spectral band;
- the depositing of a metal layer on the whole of the structured layer (14);
- the partial demetallization of the metal layer such that the resulting metal layer (15) has a maximum reflection at the level of the control areas and an increasing transparency at the level of the diffusing optical structure, the transparency increasing with distance from the control areas.

8. The method according to Claim 7, in which the partial demetallization comprises the local application by printing of a lacquer mask then the elimination of the metal layer at the non-covered sites by the lacquer mask.

9. The method according to Claim 8, in which the progressive transparency of the metal layer resulting from the demetallization is obtained by playing on the density and/or the size of the dot of the print raster of the lacquer mask.
